(19) Europäisches Patentamt
European Patent Office
Office européen des brevets

(11) **EP 4 075 314 A1**

(12) **EUROPEAN PATENT APPLICATION**
published in accordance with Art. 153(4) EPC

(43) Date of publication:
**19.10.2022 Bulletin 2022/42**

(21) Application number: **19955503.8**

(22) Date of filing: **27.12.2019**

(51) International Patent Classification (IPC):
**G06F 30/00** $^{(2020.01)}$

(52) Cooperative Patent Classification (CPC):
**G06F 30/00**

(86) International application number:
**PCT/KR2019/018578**

(87) International publication number:
**WO 2021/117964 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2019 KR 20190166605**

(71) Applicant: **E8Ight Co., Ltd
Gyeonggi-do 13477 (KR)**

(72) Inventors:
• **SONG, Sang Min
Yongin-si Gyeonggi-do 16990 (KR)**
• **LEE, Ki Dong
Seoul 07247 (KR)**
• **HAN, Chul Min
Yongin-si Gyeonggi-do 17081 (KR)**

(74) Representative: **Brann AB
P.O. Box 3690
Sveavägen 63
103 59 Stockholm (SE)**

(54) **DEVICE, METHOD, AND COMPUTER PROGRAM FOR PERFORMING FLUID ANALYSIS SIMULATION ON BASIS OF SPH**

(57) A fluid analysis simulation apparatus based on smoothed particle hydrodynamics (SPH) includes an input unit that receives data about a plurality of particles for fluid analysis simulation, a measurement space setting unit that sets a measurement space where a water level is to be measured in a space where the plurality of particles exists, a sampling space generation unit that divides the measurement space into a plurality of sampling spaces formed in a height direction of the measurement space, and a water level measurement unit that measures a water level in the measurement space based on a height of a particle included in each sampling space.

*FIG. 1*

100

| INPUT UNIT | 110 |
| MEASUREMENT SPACE SETTING UNIT | 120 |
| SAMPLING SPACE GENERATION UNIT | 130 |
| WATER LEVEL MEASUREMENT UNIT | 140 |
| PARTICLE HEIGHT DERIVING UNIT | 141 |
| PARTICLE ARRANGEMENT UNIT | 142 |
| PARTICLE GROUP GENERATION UNIT | 143 |
| PARTICLE GROUP SELECTION UNIT | 144 |

EP 4 075 314 A1

**Description**

**TECHNICAL FIELD**

The present disclosure relates to an apparatus, method, and computer program for SPH-based fluid analysis simulation.

**BACKGROUND**

Computational fluid dynamics (CFD) is a branch of fluid mechanics that uses computers to numerically calculate a dynamic flow of a fluid. CFD calculates the flow of a fluid by discretizing the Navier-Stokes equation, which is partial differential equation, through finite difference method (FDM), fnite volume method (FVM), smoothed particle hydrodynamics (SPH) and the like.

There are two methods for calculating the Navier-Stokes equation: a grid-based method that discretizes a spatial domain into a small mesh or grid; and a particle-based method that expresses a fluid as a set of particles.

In the particle-based method, a more natural simulation of a natural or physical phenomenon is can be created by expressing an analysis target as particles instead of as a grid. Examples of particle-based methods include smoothed particle hydrodynamics (SPH), moving particle semi-implicit (MPS), lattice Boltzmann method (LBM) and the like.

In a fluid analysis based on smoothed particle hydrodynamics (SPH), which is one of the particle-based methods, unlike the grid-based method, grid generation is omitted, and, thus, the result of analysis can be simulated relatively quickly.

Also, since the SPH-based fluid analysis uses particles without generating a grid, a free surface such as liquid-gas interfaces can be analyzed relatively easily.

Further, a multiphase flow of two or more of gas, liquid and solid can be analyzed relatively accurately by the SPH-based fluid analysis.

Recently, due to these advantages, SPH has been widely used in simulating the flow of a fluid.

However, according to grid-based methods that have been widely used, it is possible to divide a three-dimensional (3D) space into a grid and easily measure a water level in a measurement space using the grid. However, since particle-based methods such as SPH do not divide the 3D space into a grid, the water level in the measurement space is measured using particles.

Meanwhile, Korean Patent No. 10-1942058 discloses a configuration for predicting a height of the sea level using computational fluid dynamics.

**DISCLOSURE OF THE INVENTION**

**PROBLEMS TO BE SOLVED BY THE INVENTION**

The present disclosure provides an apparatus, method and computer program that can measure a water level in a specific space for fluid analysis simulation.

The present disclosure provides a fluid analysis simulation apparatus, method and computer program that can be used to calculate the flow by measuring a water level within a relatively short time.

However, the problems to be solved by the present disclosure are not limited to the above-described problems. There may be other problems to be solved by the present disclosure.

**MEANS FOR SOLVING THE PROBLEMS**

As a means for solving the problems, according to an aspect of the present disclosure, a fluid analysis simulation apparatus based on smoothed particle hydrodynamics (SPH), comprises an input unit that receives data about a plurality of particles for fluid analysis simulation, a measurement space setting unit that sets a measurement space where a water level is to be measured in a space where the plurality of particles exists, a sampling space generation unit that divides the measurement space into a plurality of sampling spaces formed in a height direction of the measurement space and a water level measurement unit that measures a water level in the measurement space based on a height of a particle included in each sampling space.

In one embodiment, the measurement space setting unit moves the coordinates of the measurement space and the plurality of particles in order for the center of the measurement space to be located at an origin of an orthogonal coordinate system.

In one embodiment, the fluid analysis simulation apparatus further comprises a particle selection unit that determines whether the center of each of the plurality of particles is located inside the measurement space, and selects a particle existing inside the measurement space from among the plurality of particles.

In one embodiment, a cross section of the measurement space is defined by the X-coordinate and the Z-coordinate, and a height of the measurement space is defined by the Y-coordinate, and the sampling space generation unit divides a bottom surface of the measurement space into a plurality of sampling areas defined by an X-coordinate value on the X-coordinate and a Z-coordinate value on the Z-coordinate, and generates the sampling space defined by the X-coordinate value, the Z-coordinate value and a Y-coordinate value on the Y-coordinate.

In one embodiment, the sampling space generation unit removes a sampling space, which does not include the selected particle, from among the plurality of generated sampling spaces.

In one embodiment, the water level measurement unit includes a particle height deriving unit that derives height values of respective particles included in the sampling space, a particle arrangement unit that arranges the particles included in the sampling space in ascending order based on the derived height values of the respective particles, a particle group generation unit that generates one or more particle groups by grouping the arranged particles and a particle group selection unit that selects a particle group with the largest difference between maximum and minimum values of heights of particles included in one of the generated particle groups.

In one embodiment, the particle group generation unit classifies two adjacent particles having a height difference equal to or smaller than a predetermined value into the same particle group and classifies two adjacent particles having a height difference equal to or larger than the predetermined value into different particle groups.

In one embodiment, the water level measurement unit measures, as the water level in the measurement space, a height value of a particle having the largest height among particles included in the selected particle group in each of the generated sampling areas.

According to another aspect of the present disclosure, a fluid analysis simulation method based on smoothed particle hydrodynamics (SPH) comprises receiving data about a plurality of particles for fluid analysis simulation, setting a measurement space where a water level is to be measured in a space where the plurality of particles exists, dividing the measurement space into a plurality of sampling spaces formed in a height direction of the measurement space and measuring a water level in the measurement space based on a height of a particle included in each sampling space.

According to yet another aspect of the present disclosure, a computer program stored in a medium including a sequence of instructions to perform a fluid analysis simulation based on smoothed particle hydrodynamics (SPH), wherein the computer program includes a sequence of instructions that, when executed by a computing device, cause the computing device to receive data about a plurality of particles for fluid analysis simulation, set a measurement space where a water level is to be measured in a space where the plurality of particles exists, divide the measurement space into a plurality of sampling spaces formed in a height direction of the measurement space, and measure a water level in the measurement space based on a height of a particle included in each sampling space.

The above-described aspects are provided by way of illustration only and should not be construed as liming the present disclosure. Besides the above-described embodiments, there may be additional embodiments described in the accompanying drawings and the detailed description.

**EFFECTS OF THE INVENTION**

According to any one of the means for solving the problems of the present disclosure described above, it is possible to provide an apparatus, method and computer program that can measure a water level in a measurement space without generating a grid.

Also, it is possible to reduce the cost and time for measuring a water level.

Further, by analyzing and predicting the movement of a fluid through a simulation using the result of water level measurement, the present disclosure can be applied to various technical fields.

**BRIEF DESCRIPTION OF THE DRAWINGS**

**FIG. 1** is a configuration diagram of a fluid analysis simulation apparatus according to an embodiment of the present disclosure.

**FIG. 2** is a diagram for explaining a process for setting a measurement space according to an embodiment of the present disclosure.

**FIG. 3** is a diagram for explaining a method for generating a sampling space by dividing a measurement space according to an embodiment of the present disclosure.

**FIG. 4** shows an example of a sampling space and particles in the sampling space according to an embodiment of the present disclosure.

**FIG. 5** is a diagram for explaining a method for generating and selecting a particle group according to an embodiment of the present disclosure.

**FIG. 6** is a diagram for explaining a method for measuring a water level according to an embodiment of the present disclosure.

**FIG. 7** is a flowchart of a fluid analysis simulation method according to an embodiment of the present disclosure.

## BEST MODE FOR CARRYING OUT THE INVENTION

Hereafter, embodiments of the present disclosure will be described in detail with reference to the accompanying drawings so that the present disclosure may be readily implemented by a person with ordinary skill in the art. However, it is to be noted that the present disclosure is not limited to the embodiments but may be embodied in various other ways. In drawings, parts irrelevant to the description are omitted for the simplicity of explanation, and like reference numerals denote like parts through the whole document.

Throughout this document, the term "connected to" may be used to designate a connection or coupling of one element to another element and includes both an element being "directly connected" another element and an element being "electronically connected" to another element via another element. Further, it is to be understood that the terms "comprises," "includes," "comprising," and/or "including" means that one or more other components, steps, operations, and/or elements are not excluded from the described and recited systems, devices, apparatuses, and methods unless context dictates otherwise; and is not intended to preclude the possibility that one or more other components, steps, operations, parts, or combinations thereof may exist or may be added.

Throughout this document, the term "unit" may refer to a unit implemented by hardware, software, and/or a combination thereof. As examples only, one unit may be implemented by two or more pieces of hardware or two or more units may be implemented by one piece of hardware. However, the "unit" is not limited to the software or the hardware and may be stored in an addressable storage medium or may be configured to implement one or more processors. Accordingly, the "unit" may include, for example, software, object-oriented software, classes, tasks, processes, functions, attributes, procedures, sub-routines, segments of program codes, drivers, firmware, micro codes, circuits, data, database, data structures, tables, arrays, variables and the like. The components and functions provided by the "units" can be combined with each other or can be divided up into additional components. Further, the components and the "units" may be configured to implement one or more CPUs in a device or a secure multimedia card.

Throughout this document, a part of an operation or function described as being carried out by a terminal or device may be implemented or executed by a server connected to the terminal or device. Likewise, a part of an operation or function described as being implemented or executed by a server may be so implemented or executed by a terminal or device connected to the server.

Hereinafter, embodiments of the present disclosure will be explained in detail with reference to the accompanying drawings.

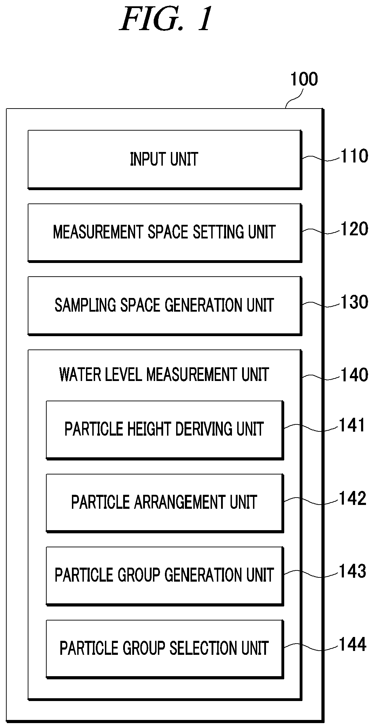

**FIG. 1** is a configuration diagram of a fluid analysis simulation apparatus according to an embodiment of the present disclosure. Referring to **FIG. 1,** a fluid analysis simulation apparatus 100 may include an input unit 110, a measurement space setting unit 120, a sampling space generation unit 130 and a water level measurement unit 140.

The fluid analysis simulation apparatus 100 may include a server, a desktop, a laptop computer, a kiosk, a smartphone and a tablet PC. However, the fluid analysis simulation apparatus 100 is not construed to be limited to these examples. That is, the fluid analysis simulation apparatus 100 may include all devices equipped with a processor for performing an SPH-based fluid analysis simulation method to be described later.

The fluid analysis simulation apparatus 100 performs a 3D flow analysis on a fluid. That is, the fluid analysis simulation apparatus 100 models a 3D simulation area and a plurality of particles located in the 3D simulation area, and analyzes the flow of the plurality of particles in the 3D simulation area.

The fluid analysis simulation apparatus 100 may perform a simulation for analyzing a fluid based on smoothed particle hydrodynamics (SPH). SPH is one of the particle-based fluid analysis techniques that can be used in computational fluid dynamics (CFD). In order to simulate the movement of a fluid, which is an analysis target, SPH can express the fluid as one or more particles. SPH can calculate a physical quantity of a particle while tracking each particle and perform a fluid analysis simulation based on the result of calculation.

The input unit 110 may receive data about a plurality of particles for fluid analysis simulation. For example, the input unit 110 may receive data about a plurality of particles from an external device such as a user device. The input unit 110 may receive data about a plurality of particles through communication with an external server.

The data about a plurality of particles may include information about an analysis target required to perform a fluid analysis simulation. The data about a plurality of particles may include information about physical properties of each particle, for example, at least one of the radius, mass, density, viscosity, velocity, acceleration and position of each particle.

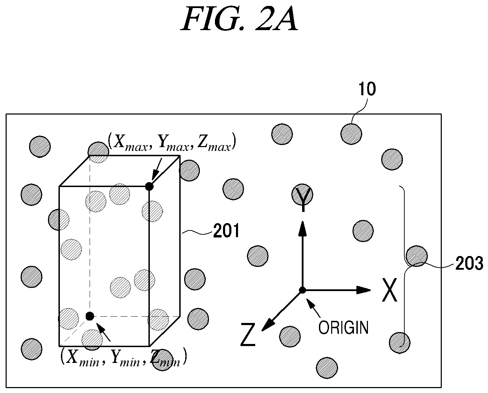

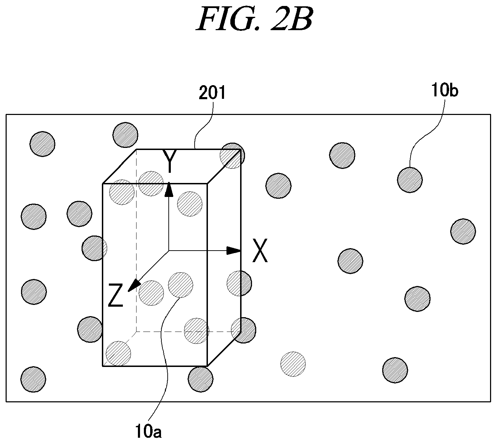

The measurement space setting unit 120 may set a measurement space where a water level is to be measured in a space where the plurality of particles exists. The measurement space may be set to include all of the plurality of particles, or may be set to include some of the plurality of particles. **FIG. 2A** and **FIG. 2B** show an example of a process for setting a measurement space.

Referring to **FIG. 2A,** a plurality of particles 10 may be arranged in a space having a 3D orthogonal coordinate system 203 depending on the data about a plurality of particles received by the input unit 110.

The measurement space setting unit 120 may set a measurement space 201 to, for example, a rectangular parallelepiped shape in the space where the plurality of particles exists. The measurement space 201 may be set by a maximum value $X_{max}$ on the X-coordinate, a minimum value $X_{min}$ on the X-coordinate, a maximum value $Y_{max}$ on the Y-coordinate, a minimum value $Y_{min}$ on the Y-coordinate, a maximum value $Z_{max}$ on the Z-coordinate and a minimum value $Z_{min}$ on the Z-coordinate in the 3D orthogonal coordinate system 203 including an X-axis, a Y-axis and a Z-axis.

Referring to **FIG. 2B,** the measurement space setting unit 120 may move the coordinates of the measurement space 201 and the plurality of particles in order for the center of the measurement space 201 to be located at an origin of the orthogonal coordinate system 203. For example, by moving the coordinate system in order for the center of the measurement space 201 to be located at the origin of the orthogonal coordinate system 203, the coordinate values of the measurement space and the coordinate values indicating the positions of the plurality of particles may be changed. However, even if the coordinates of the measurement space 201 and the plurality of particles are moved, a relative position between the measurement space 201 and an arbitrary particle is not changed.

The fluid analysis simulation apparatus 100 may further include a particle selection unit (not shown). The particle selection unit may determine whether the center of each of the plurality of particles is located inside the measurement space 201. The particle selection unit may select one or more particles existing inside the measurement space 201 from among the plurality of particles.

As shown in **FIG. 2B,** the particle selection unit may determine whether the center of each particle is located inside the measurement space 201, and select a particle 10a whose center is located inside the measurement space 201. Further, the particle selection unit may not select a particle 10b whose center is located outside the measurement space 201. In this way, particles existing outside the measurement space 201 may be excluded from the calculation.

A cross section of the measurement space 201 may be defined by the X-coordinate and the Z-coordinate, and a height of the measurement space 201 may be defined by the Y-coordinate. For example, the measurement space 201 may be set between the maximum value $X_{max}$ and the minimum value $X_{min}$ on the X-coordinate, between the maximum value $Y_{max}$ and the minimum value $Y_{min}$ on the Y-coordinate, and between the maximum value $Z_{max}$ and the minimum value $Z_{min}$ on the Z-coordinate.

The sampling space generation unit 130 may divide the measurement space 201 into a plurality of sampling spaces formed in a height direction (Y-axis direction) of the measurement space 201. For example, each sampling space may be formed into a rectangular parallelepiped shape having the same height as the measurement space with a cross section (*e.g.*, a bottom surface) having a smaller area than the measurement space.

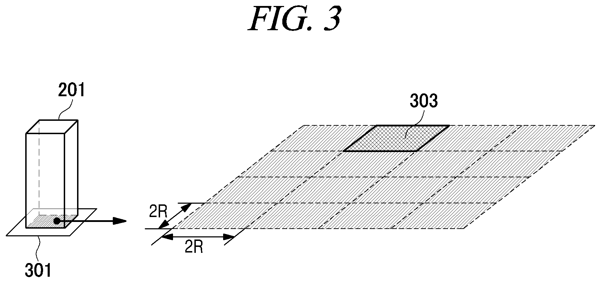

Referring to **FIG. 3,** the sampling space generation unit 130 may divide a bottom surface 301 of the measurement space into a plurality of sampling areas 303 defined by an X-coordinate value on the X-axis and a Z-coordinate value on the Z-axis. Each sampling area 303 may have, for example, a square shape. Also, the sampling area 303 may be formed such that the length of one side has the same value as the diameter of a particle.

The sampling space generation unit 130 may generate a sampling space defined by the X-coordinate value, the Z-coordinate value and a Y-coordinate value on the Y-axis. The sampling space may have the sampling areas 303 as the bottom surface and may be formed in the height direction of the measurement space.

The sampling space generation unit 130 may remove a sampling space, which does not include any particle, from among a plurality of generated sampling spaces. For example, the sampling space generation unit 130 may determine whether the center of a particle is located inside a sampling space, and remove the sampling space, which does not include any particle. In this way, a sampling space, which does not include any particle, may be excluded from the calculation.

The water level measurement unit 140 may measure a water level in the measurement space based on a height of a particle included in each sampling space. Referring back to **FIG. 1,** the water level measurement unit 140 may include a particle height deriving unit 141, a particle arrangement unit 142, a particle group generation unit 143 and a particle group selection unit 144.

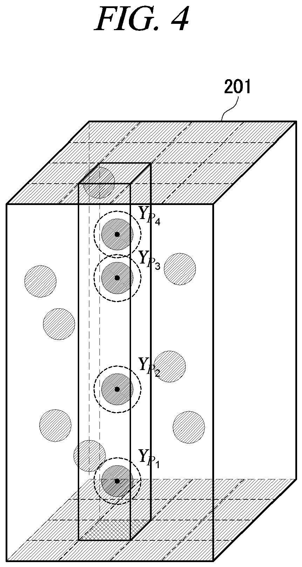

Referring to **FIG. 4,** each sampling space may include one or more particles. The particle height deriving unit 141 may derive height values of respective particles included in the sampling space. The particle arrangement unit 142 may arrange the particles included in the sampling space in ascending order based on the derived height values of the respective particles.

For example, it is assumed that particles P1, P2, P3, P4 and P5 are included in the sampling space. In this case, if height values of the respective particles P1 to P5 are derived, P1 may have a height value $Y_{P1}$ of -3, P2 may have a height value $Y_{P2}$ of -9, P3 may have a height value $Y_{P3}$ of 10, P4 may have a height value $Y_{P4}$ of 4, and P5 may have a height value $Y_{P5}$ of -1. When the particles P1 to P5 are arranged in ascending order based on the height values of the respective particles P1 to P5, the particles included in the sampling space may be arranged in order of P2, P1, P5, P4 and P3.

The particle group generation unit 143 may generate one or more particle groups by grouping the arranged particles. Each particle group is generated by grouping particles by a predetermined criterion based on height values of the respective particles included in the same sampling space. The sampling space may include one or more particle groups, and each particle group may include one or more particles.

The particle group generation unit 143 may classify two adjacent particles having a height difference equal to or smaller than a predetermined value into the same particle group. The particle group generation unit 143 may classify two adjacent particles having a height difference equal to or larger than the predetermined value into different particle groups.

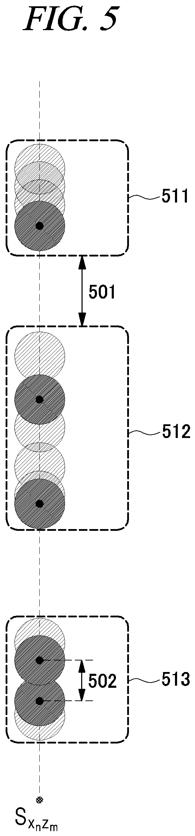

Referring to **FIG. 5,** as indicated by reference numeral 501, when a height difference between two adjacent particles is equal to or larger than the predetermined value, the two adjacent particles may be classified into different particle groups. By contrast, as indicated by reference numeral 502, when a height difference between two adjacent particles is equal to or smaller than the predetermined value, the two adjacent particles may be classified into the same particle group. In this way, the particle group generation unit 143 may generate one or more particle groups 511, 512 and 513 by grouping particles included in the sampling space.

The particle group selection unit 144 may select a particle group (e.g., a particle group including the largest number of particles) with the largest difference between maximum and minimum values of heights of particles included in one of the generated particle groups. For example, if a particle group G1 includes three particles, a particle group G2 includes five particles and a particle group G3 includes two particles, the particle group selection unit 144 may select the particle group G2 with the largest difference between maximum and minimum values of heights of particles included therein.

Referring back to **FIG. 5,** the particle group selection unit 144 may select the particle group 512 (displayed largest in the drawing) with the largest difference between maximum and minimum values of heights of particles included therein from among the particle groups 511, 512 and 513 generated in the sampling space.

The water level measurement unit 140 may measure, as the water level in the measurement space, a height value of a particle having the largest height among particles included in the selected particle group in each of the generated sampling areas.

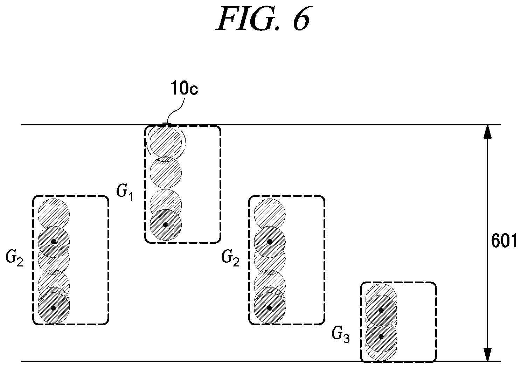

Referring to **FIG. 6,** there may be one or more particle groups selected for each sampling area generated by dividing the bottom surface of the measurement space. There may be a particle 10c having the largest height among particles included in each particle group. The water level measurement unit 140 may measure, as a water level 601 in the measurement space, a height value of the particle 10c having the largest height among the particles included in the selected particle group.

The fluid analysis simulation apparatus 100 may further include a non-illustrated flow data calculation unit.

The flow data calculation unit may use an SPH algorithm to calculate flow data caused by collisions between each particle and neighboring particles or collisions between each particle and polygons constituting a structure model, and may perform a fluid analysis simulation based on the flow data.

The SPH algorithm calculates the flow of each particle by using physical property information (*e.g.*, mass, velocity, viscosity and acceleration) of each particle, and the physical property information of each particle is interpolated by using a set of kernel functions such as a radial basis function centered at the position of each particle.

Interpolating the physical property information of each particle as described above generates continuous fields such as a pressure field and a viscosity field that can be used to calculate the dynamics of the fluid using standard equations such as the Navier-Stokes equation.

For example, the Navier-Stokes equation models the fluid as follows.

[Equation 1]

$$\rho\left(\left(\frac{\partial v}{\partial t}\right) + v \cdot \nabla v\right) = \rho g - \nabla p + \mu \nabla^2 v$$

In Equation 1, "v" denotes a velocity of a particle, "ρ" denotes a density of the particle, "p" denotes a pressure on the particle, "g" denotes gravity and "μ" denotes a viscosity coefficient of the fluid.

Meanwhile, according to the SPH algorithm, the density of each particle is derived by Equation 2.

[Equation 2]

$$\rho(x_i) = \sum_j m_j W(x_i - x_j, h)$$

Also, the pressure force on each particle is derived by Equation 3.

[Equation 3]

$$f_i^{pressure} = -\sum_j m_j \frac{p_i + p_j}{2\rho_j} \nabla W(x_i - x_j, h)$$

Further, the viscosity force of each particle is derived by Equation 4.

[Equation 4]

$$f_i^{viscosity} = \mu \sum_j m_j \frac{v_j - v_i}{\rho_j} \nabla^2 W(x_i - x_j, h)$$

The flow data calculation unit calculates changes in flow data such as density, pressure and viscosity of each particle by using the SPH algorithm. For example, the flow data calculation unit calculates flow data of each particle in a next time step (first time step) based on initial flow data of each particle, and calculates the flow of each particle based on the calculated flow data.

Then, the flow data calculation unit calculates flow data of each particle in a next time step based on the flow data of each particle in the first time step, and calculates the flow of each particle based on the calculated flow data.

The flow data calculation unit may perform the fluid analysis simulation by calculating the flow data of each particle in each time step and calculating the flow of each particle.

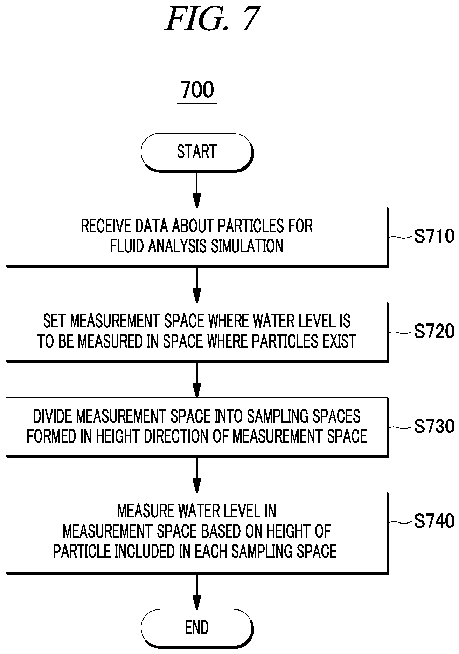

FIG. 7 is a flowchart of a fluid analysis simulation method according to an embodiment of the present disclosure. A fluid analysis simulation method 700 to be performed by the apparatus 100 illustrated in FIG. 7 includes the processes time-sequentially performed by the apparatus 100 according to the embodiment illustrated in FIG. 1. Therefore, the descriptions of the processes may also be applied to the fluid analysis simulation method to be performed by the apparatus 100 according to the embodiment illustrated in FIG. 1 even though they are omitted hereinafter.

In a process S710, the apparatus 100 may receive data about a plurality of particles for fluid analysis simulation.

In a process S720, the apparatus 100 may set a measurement space where a water level is to be measured in a space where the plurality of particles exists.

In a process S730, the apparatus 100 may divide the measurement space into a plurality of sampling spaces formed in a height direction of the measurement space.

In a process S740, the apparatus 100 may measure a water level in the measurement space based on a height of a particle included in each sampling space.

In the descriptions above, the processes S710 to S740 may be divided into additional processes or combined into fewer processes depending on an embodiment. In addition, some of the processes may be omitted and the sequence of the processes may be changed if necessary.

The method for performing fluid analysis simulation on basis of SPH by the fluid analysis simulation apparatus described above with reference to FIG. 1 to FIG. 7 can be implemented in a computer program stored in a medium to be executed by a computer or a storage medium including instructions codes executable by a computer. Also, the method for performing fluid analysis simulation on basis of SPH by the fluid analysis simulation apparatus described above with reference to FIG. 1 to FIG. 7 can be implemented in a computer program stored in a medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. A fluid analysis simulation apparatus based on smoothed particle hydrodynamics (SPH), comprising:

   an input unit that receives data about a plurality of particles for fluid analysis simulation;
   a measurement space setting unit that sets a measurement space where a water level is to be measured in a space where the plurality of particles exists;
   a sampling space generation unit that divides the measurement space into a plurality of sampling spaces formed in a height direction of the measurement space; and
   a water level measurement unit that measures a water level in the measurement space based on a height of a particle included in each sampling space.

2. The fluid analysis simulation apparatus of Claim 1,
   wherein the measurement space setting unit moves the coordinates of the measurement space and the plurality of particles in order for the center of the measurement space to be located at an origin of an orthogonal coordinate system.

3. The fluid analysis simulation apparatus of Claim 1, further comprising:
   a particle selection unit that determines whether the center of each of the plurality of particles is located inside the measurement space, and selects a particle existing inside the measurement space from among the plurality of particles.

4. The fluid analysis simulation apparatus of Claim 3,

   wherein a cross section of the measurement space is defined by X-coordinate and Z-coordinate, and a height of the measurement space is defined by Y-coordinate, and
   the sampling space generation unit divides a bottom surface of the measurement space into a plurality of sampling areas defined by an X-coordinate value on the X-coordinate and a Z-coordinate value on the Z-coordinate, and generates the sampling space defined by the X-coordinate value, the Z-coordinate value and a Y-coordinate value on the Y-coordinate.

5. The fluid analysis simulation apparatus of Claim 4,
   wherein the sampling space generation unit removes a sampling space, which does not include the selected particle, from among the plurality of generated sampling spaces.

6. The fluid analysis simulation apparatus of Claim 1,
   wherein the water level measurement unit includes:

   a particle height deriving unit that derives height values of respective particles included in the sampling space;
   a particle arrangement unit that arranges the particles included in the sampling space in ascending order based on the derived height values of the respective particles;
   a particle group generation unit that generates one or more particle groups by grouping the arranged particles;

and

a particle group selection unit that selects a particle group with the largest difference between maximum and minimum values of heights of particles included in one of the generated particle groups.

7.  The fluid analysis simulation apparatus of Claim 6,
wherein the particle group generation unit classifies two adjacent particles having a height difference equal to or smaller than a predetermined value into the same particle group and classifies two adjacent particles having a height difference equal to or larger than the predetermined value into different particle groups.

8.  The fluid analysis simulation apparatus of Claim 6,
wherein the water level measurement unit measures, as the water level in the measurement space, a height value of a particle having the largest height among particles included in the selected particle group in each of the generated sampling areas.

9.  A fluid analysis simulation method based on smoothed particle hydrodynamics (SPH), comprising:

receiving data about a plurality of particles for fluid analysis simulation;
setting a measurement space where a water level is to be measured in a space where the plurality of particles exists;
dividing the measurement space into a plurality of sampling spaces formed in a height direction of the measurement space; and
measuring a water level in the measurement space based on a height of a particle included in each sampling space.

10. The fluid analysis simulation method of Claim 9,
wherein in the setting a measurement space, the coordinates of the measurement space and the plurality of particles are moved in order for the center of the measurement space to be located at an origin of an orthogonal coordinate system.

11. The fluid analysis simulation method of Claim 9, further comprising:
determining whether the center of each of the plurality of particles is located inside the measurement space and selecting a particle existing inside the measurement space from among the plurality of particles.

12. The fluid analysis simulation method of Claim 11,

wherein a cross section of the measurement space is defined by the X-coordinate and the Z-coordinate, and a height of the measurement space is defined by the Y-coordinate, and
in the generating sampling spaces, a bottom surface of the measurement space is divided into a plurality of sampling areas defined by an X-coordinate value on the X-coordinate and a Z-coordinate value on the Z-coordinate, and the sampling space defined by the X-coordinate value, the Z-coordinate value and a Y-coordinate value on the Y-coordinate is generated.

13. The fluid analysis simulation method of Claim 12,
wherein in the generating sampling spaces, a sampling space, which does not include the selected particle, is removed from among the plurality of generated sampling spaces.

14. The fluid analysis simulation method of Claim 9,
wherein the measuring a water level includes:

deriving height values of respective particles included in the sampling space;
arranging the particles included in the sampling space in ascending order based on the derived height values of the respective particles;
generating one or more particle groups by grouping the arranged particles; and
selecting a particle group with the largest difference between maximum and minimum values of heights of particles included in one of the generated particle groups.

15. The fluid analysis simulation method of Claim 14,
wherein in the generating one or more particle groups, two adjacent particles having a height difference equal to or smaller than a predetermined value are classified into the same particle group and two adjacent particles having a height difference equal to or larger than the predetermined value are classified into different particle groups.

16. The fluid analysis simulation method of Claim 14,
wherein in the measuring a water level, a height value of a particle having the largest height among particles included in the selected particle group in each of the generated sampling areas is measured as the water level in the measurement space.

17. A computer program stored in a medium including a sequence of instructions to perform a fluid analysis simulation based on smoothed particle hydrodynamics (SPH),
wherein the computer program includes a sequence of instructions that, when executed by a computing device, cause the computing device to:

receive data about a plurality of particles for fluid analysis simulation;
set a measurement space where a water level is to be measured in a space where the plurality of particles exists;
divide the measurement space into a plurality of sampling spaces formed in a height direction of the measurement space; and
measure a water level in the measurement space based on a height of a particle included in each sampling space.

# FIG. 1

100

| INPUT UNIT | 110 |

| MEASUREMENT SPACE SETTING UNIT | 120 |

| SAMPLING SPACE GENERATION UNIT | 130 |

WATER LEVEL MEASUREMENT UNIT —140

| PARTICLE HEIGHT DERIVING UNIT | 141 |

| PARTICLE ARRANGEMENT UNIT | 142 |

| PARTICLE GROUP GENERATION UNIT | 143 |

| PARTICLE GROUP SELECTION UNIT | 144 |

# FIG. 2A

## FIG. 2B

## FIG. 3

# FIG. 4

# FIG. 5

## FIG. 6

# FIG. 7

<u>700</u>

```
        ┌─────────┐
        │  START  │
        └─────────┘
             │
             ▼
┌──────────────────────────────────┐
│   RECEIVE DATA ABOUT PARTICLES FOR   │──── S710
│      FLUID ANALYSIS SIMULATION       │
└──────────────────────────────────┘
             │
             ▼
┌──────────────────────────────────┐
│  SET MEASUREMENT SPACE WHERE WATER LEVEL IS │──── S720
│  TO BE MEASURED IN SPACE WHERE PARTICLES EXIST │
└──────────────────────────────────┘
             │
             ▼
┌──────────────────────────────────┐
│  DIVIDE MEASUREMENT SPACE INTO SAMPLING SPACES │──── S730
│  FORMED IN HEIGHT DIRECTION OF MEASUREMENT SPACE │
└──────────────────────────────────┘
             │
             ▼
┌──────────────────────────────────┐
│         MEASURE WATER LEVEL IN          │──── S740
│   MEASUREMENT SPACE BASED ON HEIGHT OF   │
│  PARTICLE INCLUDED IN EACH SAMPLING SPACE │
└──────────────────────────────────┘
             │
             ▼
        ┌─────────┐
        │   END   │
        └─────────┘
```

# EP 4 075 314 A1

## INTERNATIONAL SEARCH REPORT

| International application No. |
|---|
| PCT/KR2019/018578 |

**A. CLASSIFICATION OF SUBJECT MATTER**

*G06F 30/00(2020.01)i*

According to International Patent Classification (IPC) or to both national classification and IPC

**B. FIELDS SEARCHED**

Minimum documentation searched (classification system followed by classification symbols)
G06F 30/00; G01F 1/00; G06F 17/10; G06F 19/00; G06T 19/00

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: SPH(Smoothed-Particle Hydrodynamics), fluid, analysis, simulation, particle, measure, sampling, space

**C. DOCUMENTS CONSIDERED TO BE RELEVANT**

| Category* | Citation of document, with indication, where appropriate, of the relevant passages | Relevant to claim No. |
|---|---|---|
| Y | JP 2002-091941 A (SONY CORP.) 29 March 2002<br>See paragraphs [0011]-[0019]; and claims 1-2. | 1-5,9-13,17 |
| A | | 6-8,14-16 |
| Y | KR 10-2012-0137828 A (KOREA ADVANCED INSTITUTE OF SCIENCE AND TECHNOLOGY) 24 December 2012<br>See paragraph [0005]; and claim 1. | 1-5,9-13,17 |
| Y | JP 2009-069930 A (PROMETECH SOFTWARE INC.) 02 April 2009<br>See paragraphs [0011]-[0012]; and claims 1 and 3. | 2,4-5,10,12-13 |
| A | KR 10-1328739 B1 (KOREA UNIVERSITY RESEARCH AND BUSINESS FOUNDATION) 11 November 2013<br>See paragraphs [0011]-[0012]; and claim 1. | 1-17 |
| A | KR 10-2012-0100419 A (FXGEAR INC.) 12 September 2012<br>See paragraphs [0006]-[0007]; and claims 1-8. | 1-17 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 AUGUST 2020 (31.08.2020) | **31 AUGUST 2020 (31.08.2020)** |

| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |
|---|---|

Form PCT/ISA/210 (second sheet) (January 2015)

**EP 4 075 314 A1**

| | | | |
|---|---|---|---|
| INTERNATIONAL SEARCH REPORT | | International application No. | |
| Information on patent family members | | **PCT/KR2019/018578** | |

| Patent document cited in search report | Publication date | Patent family member | Publication date |
|---|---|---|---|
| JP 2002-091941 A | 29/03/2002 | None | |
| KR 10-2012-0137828 A | 24/12/2012 | KR 10-1267627 B1 | 27/05/2013 |
| | | US 2012-0316848 A1 | 13/12/2012 |
| JP 2009-069930 A | 02/04/2009 | CN 101388108 A | 18/03/2009 |
| | | CN 101388108 B | 23/11/2011 |
| | | DE 102008034519 A1 | 12/03/2009 |
| | | DE 102008034519 B4 | 11/07/2019 |
| | | FR 2920899 A1 | 13/03/2009 |
| | | FR 2920899 B1 | 16/03/2012 |
| | | GB 2452808 A | 18/03/2009 |
| | | GB 2452808 B | 25/01/2012 |
| | | JP 5371221 B2 | 18/12/2013 |
| | | KR 10-0960588 B1 | 03/06/2010 |
| | | KR 10-2009-0027143 A | 16/03/2009 |
| | | US 2009-0070079 A1 | 12/03/2009 |
| | | US 7920996 B2 | 05/04/2011 |
| KR 10-1328739 B1 | 11/11/2013 | KR 10-2013-0094564 A | 26/08/2013 |
| KR 10-2012-0100419 A | 12/09/2012 | KR 10-1244826 B1 | 19/03/2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101942058